# EUROPEAN PATENT APPLICATION

(11) **EP 3 059 442 A1**
(43) Date of publication of application: **24.08.2016**
(21) Application number: 14826589.5
(22) Date of filing: 15.07.2014
(51) Int. Cl.: F03D 1/06, F03D 1/02

(54) **PSP WIND-POWERED GENERATOR COMPRISING BLADES AT DIHEDRAL ANGLES**

(30) Priority: 17.07.2013 PE 15652013
(71) Applicant: Saavedra Pacheco, Pedro, Santa Anita, Lima 43 (PE)
(72) Inventor: Saavedra Pacheco, Pedro, Santa Anita, Lima 43 (PE)
(74) Representative: González López-Menchero, Álvaro Luis
(86) International application number: PCT/PE2014/000010
(87) International publication number: WO 2015/009175

(57) **Abstract**

The invention relates to a wind-powered generator comprising blades at dihedral angles (PSP), characterized by an aerodynamic, semi-flat blade having, on one if its sides, a bent section measuring approximately a quarter of the total width of the blade and forming a dihedral angle of less than 30°, the interior space of which captures the kinetic power of the wind impacting on the blade, thereby generating a powerful rotary movement in that direction. The blades form a diametrical set of two blades generating a strong and effective rotary movement at a 90° angle to the linear movement of the wind. The invention can be used to create: a generator comprising one single set of two blades; a generator comprising two sets of blades moving in one direction and generating an aggregate output; and/or a generator comprising two sets of blades rotating in opposite directions that generate twice the output of a set of blades rotating in one direction, with one single fixed and mobile structure, one single generator and one single wind mass.

## Description

### 1. PRIOR ART

The prior art in the field of wind-powered generators with horizontal-axis blades is based on making more perfect and powerful wind-powered generators with three aerodynamic blades, which have now reached their technological ceiling, with a system that consists of blades rotating at a 90° angle to the direction of the wind and an output capacity that depends on high-speed winds at a height of up to 150 m., and which are becoming more sophisticated with the improvement of blades with an aerodynamic shape and new materials, such as carbon fiber. Said blades, due to their position of rotation, reduce the kinetic power of the wind in said the spaces to the sides of said generator, blocking the possibility of the installation of another set of blades on the same axis, for which this invention provides a solution.

### 2. SUMMARY OF THE INVENTION

The invention for which patent protection is being sought is in the field of renewable wind energy and has been developed with the objective of obtaining greater power from wind at equal or lower heights than that of current wind-powered generators with aerodynamic blades, which up until now have been the most marketed and productive in the world, requiring high-speed winds that only exist at great heights, the engineering of such generators continuing to produce more electrical power than that of their immediate predecessors.

This led the inventor to consider new possibilities with the technical resources gained using flat blades in his previous two inventions, one with a vertical axis, patented in the United States, and another with a horizontal axis for extendable blades published by the WIPO and in the national phase, both considered abandoned due to a lack of capital in order to build marketable prototypes and have them scientifically evaluated in order to present them on the market with the purpose of serving humanity.

Said possibilities were designed on paper and hypotheses were developed that could be proven true, and if they were not proven to be true, they would not deserve to be patented. Since proof tests done by the inventor have demonstrated their validity, the next step was to demonstrate their value as a potential product to produce more renewable energy and contribute to the fight against climate change, which will only be stopped or reduced by a greater production of renewable energy.
- First hypothesis: That one flat blade with an acute dihedral angle on one of its sides can rotate on a horizontal axis at a 90° angle to the wind.
- Second hypothesis: That two sets of blades with acute dihedral angles on one of their sides can rotate on one horizontal axis in only one direction of rotation.
- Third hypothesis: Two sets of blades with dihedral angles, with independent shafts centered on one mathematical axis, can rotate in opposite directions, with the same wind mass, as two sets with only one direction of rotation.
- Fourth hypothesis: Two rotor shafts of two sets of dual rotor blades with dihedral angles can activate the two magnetic fields of a dual rotor electrical generator, doubling the output of each set of blades with only one wind mass.

This requires the design and construction of new semi-flat blades that capture more kinetic power from the wind than aerodynamic blades, retaining 50% of the wind that impacts the blade on its front side, the two halves of the airflow going to the two longitudinal sides of said blade, half of which, in this invention, is retained by the interior side of the dihedral angle of the new blade, converting said wind mass impacting the interior side of said short side into a driving force that is additional to that which is obtained with a traditional design. For this purpose a prototype for testing was designed and built, made of only two elongated rectangular blades with a hub in the center to adjust to a horizontal rotor shaft, whose two equal sides toward their ends were constructed with light aluminum sheets, automatically structured with a total bend in one continuous straight side, the other side containing an additional sheet, bent at a dihedral angle at approximately 30% of the width of the largest or main part. Made to operate at a 90° angle to the direction of the wind coming from a household fan, it was show to perfectly match the hypothesis of the properties of the increase in the rotary force of the new blades on the rotor shaft. Compared to a set of three aerodynamic blades, it demonstrated greater speed and balance. The three-bladed system proved to be slow, and the new system of two blades at dihedral angles demonstrated a greater rotating smoothness and speed, giving it merit to be presented for patent protection.

The second objective of the experiment consisted of conducting an analysis of the amount of wind used by the two blades with dihedral angles, both blades being one single long section forming a diametric rectangle in movement, and it was observed that in this way it rotated at a very high speed, always proportional to the unaltered immense wind mass that passed to both sides of the blades, conserving its kinetic power intact, which nothing was using. All of this generated two new inevitable technical objectives.

The first is to make two sets of blades function on the same horizontal shaft, only separated by the nacelle and its mechanical elements and the conventional electrical generator, if both rotate in the same direction.

The second is to make two sets of blades function while rotating in opposite directions on the same theoretical axis, but with each shaft functioning with a dual rotor electrical generator.

### 3. BRIEF DESCRIPTION OF THE DRAWINGS

Figure 01 - View of a PSP generator with blades at dihedral angles for publication.
Figure 02 - Sectional view of a current aerodynamic blade.
Figure 03 - Sectional view of a blade with a dihedral angle, as tested.
Figure 04 - Sectional view of a developed blade with a dihedral angle.
Figure 05 - Vertical view of a blade with a dihedral angle, as tested.
Figure 06 - Vertical view of a blade with a dihedral angle for large generators.
Figure 07 - Vertical view of two blades with dihedral angles set at a 180° angle of the circle of rotation.
Figure 08 - Vertical view of a set of two blades with dihedral angles in relation to the horizontal rotor shaft coming out of the nacelle.
Figure 09 - Sectional view of a blade with a dihedral angle in relation to the wind.
Figure 10 - Sectional elevation of a wind-powered generator with two blades rotating in the same direction on one single horizontal shaft.
Figure 11 - Vertical view of a set of two blades with dihedral angles intersecting at the center point to rotate in the same direction, centered by a hub on the rotor shaft.
Figure 12 - Sectional elevation of a wind-powered generator showing the incidence of the wind on the first and second set.
Figure 13 - Vertical view of two sets of blades with dihedral angles intersecting and centered on one single common axis with the dihedral angles on opposite sides in each set in order to rotate in opposite directions.
Figure 14 - Elevation of a dual rotor wind-powered generator, showing the opposite rotary movement of the shafts, from the blades to the dual rotor generator.

### 4. SPECIFICATION OF THE INVENTION

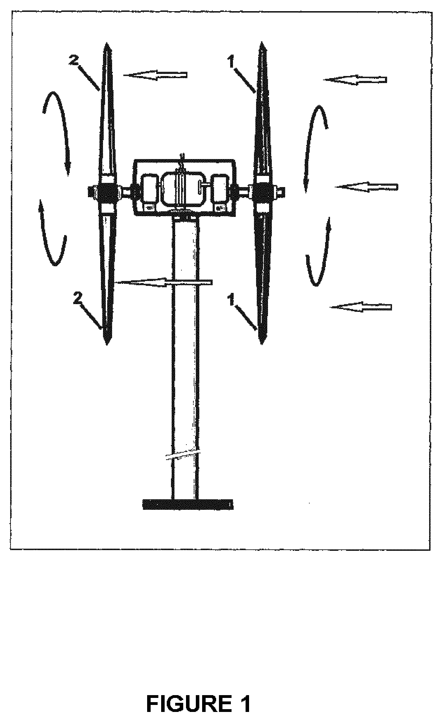

The invention developed experimentally and theoretically, which in its maximum expression is worthy of patent protection, is presented in figure 01 as a new, complete wind-powered dual rotor generator for maximum production of renewable energy for the purposes of publication.

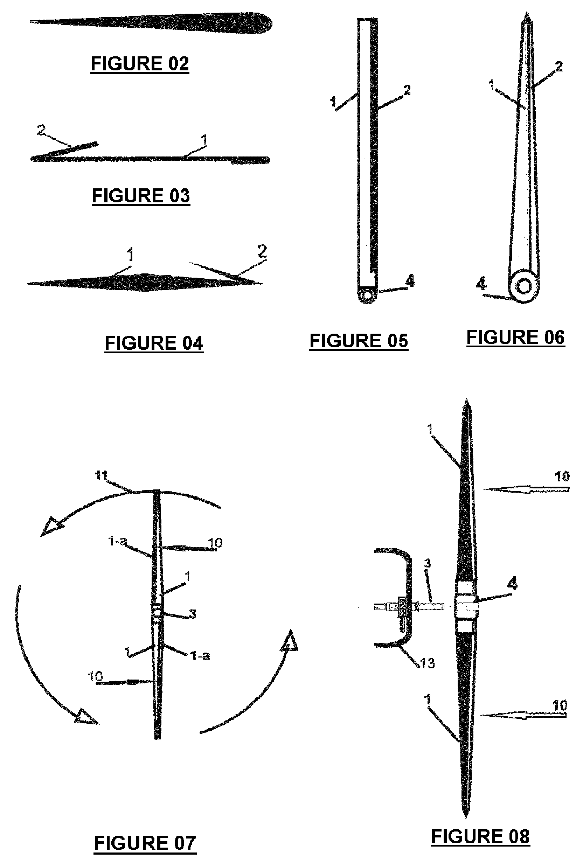

Since the invention has the objective of obtaining greater electrical output than the current three aerodynamic blades, the cross-section of which is shown in figure 02, a new blade was designed for laboratory purposes. Said rectangular blade measuring 20 cm. long, flat, as mentioned in the hypothesis, shown in figure 03, built from light sheets of bent aluminum and tested with an office fan, for the purposes of said research process. Said rectangular sheet ( 1 ), with an additional dihedral angle ( 2 ), that is shown in figure 03 and figure 05, as it was built and tested. A blade that may be valid for small or medium size generators because it has more area for impact with the wind, which is more suitable in said proportions.

The information presented up to here proves the first hypothesis of obtaining a rotary movement of a blade with a dihedral angle on a horizontal axis at a 90° angle to the direction of the wind. However, the longer blades for generators at a higher wind speed are shown in figure 04, in a transverse cross-section of said blade ( 1 ), with an acute conical shape for its two outer sides, as a result of the necessary interior structure for blades of great length and weight, as well as in the additional section in a dihedral angle ( 2 ), and a developed blade that is complete for generators of great length and output capacity that require an acute conical shape, as can be seen in vertical view in figure 06, where the blade ( 1 ) begins at the cylindrical hub ( 4 ) and extends in a decreasing shape towards the tip, and to the right one can see the additional dihedral profile in white ( 2 ).

Figure 07 shows a vertical view of two blades assembled in pairs, pairing the sections ( 1 ) to the lower left and upper right, the second sections in the same order but not equal, forming a diameter on the shaft ( 3 ), with the two blades ( 1 ) in a diametrical position inside the circle of rotation of the upper blade to the left and the lower blade to the right, moved by the wind ( 10 ), which drives the smaller sides to the left and to the right ( 1-a ) moving from the center of the blade toward the dihedral angle, generating a powerful circular rotary movement of 360°, expressed by the arrows ( 11 ).

This figure may be objected to by saying it is the same as what aerodynamic blades do, but this is not the case, since in said blades the wind freely diverts to both sides of the blade, while in blades with a dihedral angle, half of the wind escapes and the other half creates a special driving force and does not escape, while the exterior vertex of the angle cuts the wind to that side, reaching a high degree of rotation, shown in figure 08, where the rotary movement is transferred to the electrical generator by means of the rotor shaft ( 3 ) to the engine room, or nacelle ( 13 ). Said shaft will be adjusted to the hub ( 4 ) where the blades ( 1 ), shown laterally, receive the force of the wind ( 10 ).

Hypothesis no. 1 is that a flat blade with a dihedral angle on one of its sides, on a horizontal shaft, can rotate at a 90° angle to the wind, which is considered proven based of what has been developed up to now and with the performance tests done with the test prototype, activated by the wind of a fan and rectangular blades built out of aluminum.

The second hypothesis: Two sets of blades with dihedral angles on one of their sides can rotate on one single horizontal shaft in one single direction of rotation.

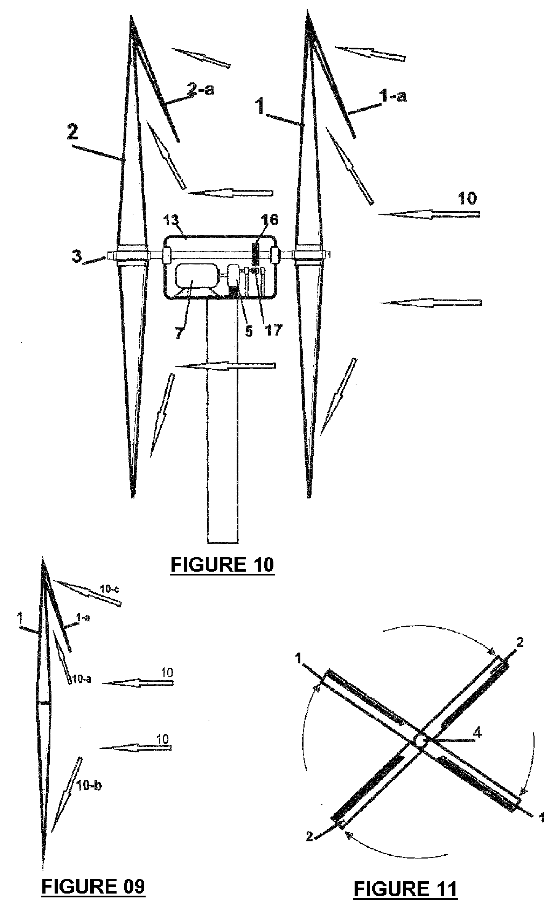

Figure 09 shows a transverse cross-section of a blade with a dihedral angle and its relation to the wind ( 10 ), which hits the central area of the blade directly but moves to its two ends and disappears, the tab ( 1-a ) that is joined to the upper end of the blade forming a dihedral angle, directing half of the wind mass to the interior thereof (10-a), which hits the upper half of the blade. The wind, not finding an exit, energetically drives the entire blade to powerfully rotate to that side, while the wind (10-c) equivalent to more or less one fourth of the wind mass also hits the blade, adding to wind (10-a), and wind (10-b) escapes away, effectively generating a rotary movement of the blade.

Figure 10 shows two blades in a perspective that only shows the back half of the two blades in an exact transverse cross section and the center of the rotor shaft of the system, which is why, since both blades are aligned on the same point, they only have one dihedral angle (1-a and 2-a ), each one at the upper edge of said blade. The two blades (1 and 2), are exactly the same because they are drawn one behind the other, in order to help understand how they work, but in practice they will be adjusted so that one is at a 90° angle to the other for maximum output. Said figure shows the rotary movement of the blades that move in the same direction, whose mechanical force of torsion is transferred through the rotor shaft ( 3 ), by the gears (16 and 17), toward the gear box to control the speed, ( 5 ) and then finally to the conventional electrical generator ( 7 ).

Lastly, figure 11 shows two sets of twin blades ( 1 and 2 ) that are exactly the same, intersecting at the central point, but centered by the hub on one single shaft, generating rotary movement in one single direction, as a clock showing the time by the position of its dihedral angles, which are crucial to this function. Figures that confirm the second hypothesis.

Hypothesis 3 maintains that: Two sets of blades with dihedral angles, with independent shafts centered on one single mathematical axis, can rotate in opposite directions, with the same wind mass, as two sets of blades with only one direction of rotation.

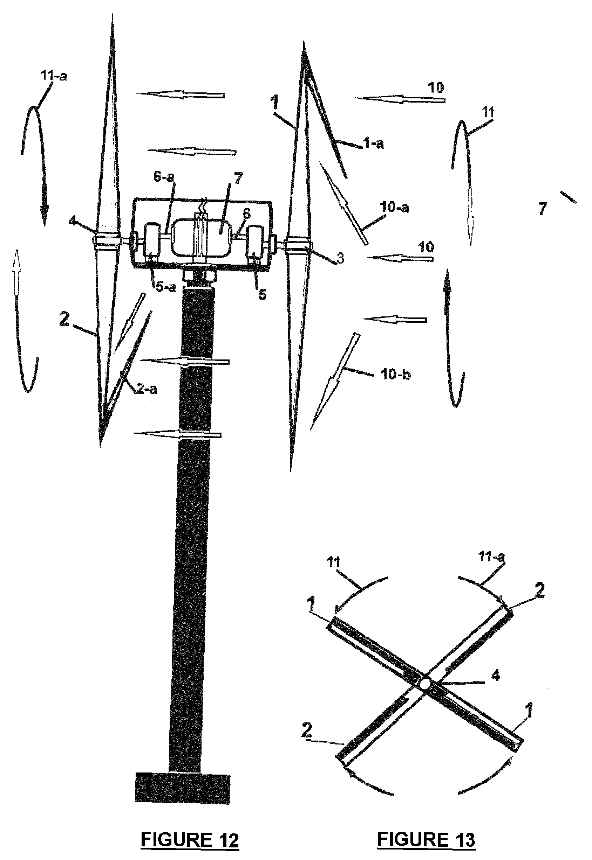

The tests were done with two sets of twin blades installed in the same supporting column that contained two sets of double bearings centered on one mathematical axis, inside of which two equal rotor shafts made of tubular steel rotated, supporting two sets of twin blades, with tabs or bends at a dihedral angle on the different sides, as shown in figure 12, which shows a cross-section of two blades moving in opposite directions seen at 0° from the rotational line, from the center of the rotor shaft ( 3 ) and of the whole system defined by rotary arrows (11), for the blade ( 1 ) that receives the wind (10) which hits it head on, and divides in two directions, where the wind ( 10-a ) goes into the dihedral angle 1-a, driving the blade in that direction and the wind 10-b disappears.

The rotary movement of the axis ( 3 ) is transferred to the speed-multiplying gear box ( 5 ), and by the shaft ( 6 ), to one of the fields of the dual rotor electrical generator ( 7 ), providing 50% of the rpm while the blade ( 2 ), located in the back of the nacelle with the dihedral angle at the lower part, will receive the same effect by the wind, which will drive it in the opposite direction, providing its rotary movement marked by the arrow (11-a ), from there through the shaft ( 3 ) to the speed multiplier ( 5-a ) and through the shaft ( 6-a ) to the other magnetic field of the electrical generator, providing 50% of the remaining rpm for its operation. The concept of 50% is only a reference, because in this case it is not necessary for there to be equal rpm for each opposing set of blades. It is not a relevant condition because the rpm, if unequal, will always be the same as the sum of each one of the shafts, which will always be greater than the generators with rotor and stator that go from zero to what is only produced by the rotor.

Figure 13 shows two sets of blades (1 and 2 ) with dihedral angles, intersecting at the central point, centered by the hub ( 4 ), with their dihedral angles on different sides, generating opposite rotary movement, indicated by the arrows (11 ) and (11-a ). Figures that demonstrate the tests carried out to prove the third hypothesis of the present invention.

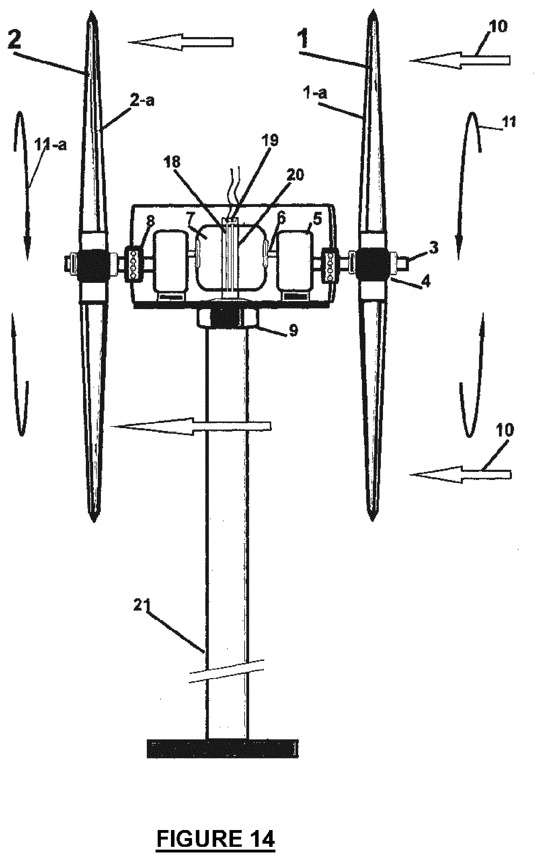

Figure 14 shows an elevation of the same system as in figure 13, with the difference that, in this case, the complete system is shown, with the tower ( 21 ) that shows a system of gears ( 9 ) that sustain the nacelle ( 13 ), which contains all the machines that interlock to carry out the rotary movement and produce electrical energy, and on said gears the shaft will be oriented in line with the movement of the wind using known electromechanical means. Said figure shows the blades (1 and 2), from a lateral perspective in a downward longitudinal form, the set of blades ( 1 ) receiving the first impact of the wind, and the blades ( 2 ) the impact of the wind that has passed to the other side without losing its kinetic power by the large space left by the diametrical form of two single blades.

Fourth hypothesis: Two rotor shafts from two sets of blades with dihedral angles and rotating in opposite directions can activate the two magnetic fields of a dual rotor electrical generator, doubling the electrical output of each set of blades with only one wind mass.

This hypothesis is proven by the construction of a wind-powered generator made up of two sets of blades with dihedral angles, with physical shafts centered around one single mathematical axis at the two ends of a nacelle shown in figure 13, permanently aligned at 0° of the direction of the wind, the first blade ( 1 ) on the front side of the generator and the second ( 2 ) on the back side, each one with a dihedral angle ( 1-a and 2-a ) and opposite rotation, where the rotor shafts ( 3 ) transfer their rotary movement to the gear box ( 5 ) and through the shafts ( 6 ) to the dual rotor electrical generator or alternator ( 7 ). But since the dual rotor electrical generator receives the rotary drive of the two shafts rotating in opposite directions ( 6 and 6-a ), each one of them affects an equivalent field: One affects the rotor and the other the stator. In this case, both fields rotate or spin in opposite directions, joining their rpm, which can be up to twice the normal amount, and if not, the total rpm will always be very high compared to one single set of blades, using the same wind mass for this purpose, which is used by a generator of two sets of blades in only one direction of rotation.

To better illustrate this point, the same figure 14 shows an electrical generator ( 7-a), floating, without a visible physical support, where the electrical current ( 18 ) produced is received by the carbon brushes (19), suspended by an outer ring ( 20 ) that never touches the generator.

I already presented the dual rotor electrical generator in my invention "Marine Wind Turbine with Extendable Blades", in which more than two sets of three blades can rotate in opposite directions, by rotating in the same direction as the wind, which does not alter the kinetic power of said wind mass in the lateral spaces of rotation. It is presented here only to illustrate how to produce twice the electrical energy using blades with dihedral angles rotating in opposite directions, which in this case rotate like giant three-bladed towers at a 90° angle to direction of the wind with the same effect, but whose rotational source is not the same as the previous one and which has its own principles and foundation.

## Claims

1. A wind-powered generator with blades at dihedral angles (PSP), **characterized by** an aerodynamic blade made up of two longitudinal sections with: one main blade semi-flat on both sides that captures the kinetic power of the wind rotating at a 90° angle to said airflow, and a smaller, additional lateral blade approximately one quarter of the largest width of the blade, fixed to one of its sides forming an angle of less than 30°, said section being programmed to detain and capture the kinetic power of the wind that escapes to that side when colliding with said natural vector, causing a stronger rotational force in said direction; said blades assembled in a set of two at a 180° angle to their horizontal rotor shaft proving the hypothesis that two sets of parallel blades, one in front of and the other at the rear of an electrical generator, can double its output, as well as another hypothesis, that two sets of blades with dihedral angles centered on one single mathematical axis can rotate in opposite directions, activating the two magnetic fields of a floating dual rotor electrical generator, once again doubling the output of each set.

2. The wind-powered generator with blades at dihedral angles (PSP), according to claim 1, **characterized by** an aerodynamic blade made up of a semi-flat, longitudinal section on both sides with a central portion that is thicker for structural reasons, said blade forming an acute dihedral angle of less than 30° on one of its sides with a section equivalent to one quarter of the thickness of the blade, to capture the additional kinetic power of the wind that drives it to that side, said dihedral angle having a sharp outer edge to cut the wind, which on its outer side captures one fifth of the wind that collides with the entirety of the blade at a dihedral angle.

3. The wind-powered generator with blades at dihedral angles (PSP), according to claim 2, **characterized in that** it produces a directional rotary movement in the blade through the position of the dihedral angle, either to the left or to the right, when they are adjusted diametrically to a horizontal rotor shaft of a wind-powered generator with blades at dihedral angles.

4. The wind-powered generator comprising blades at dihedral angles (PSP), according to claim 2, **characterized by** its semi-flat blades that are wide at their base or connection point to another blade, forming a diametrical set with another that is similar, with a decreasing longitudinal shape towards the sides and front to an acute angle on its opposite side, being easy to assemble and disassemble to and from the horizontal rotor shaft for installation and maintenance.

5. The wind-powered generator with blades at dihedral angles (PSP), according to claim 2, **characterized by** the manufacture of the dihedral blades in two shapes: one for small and medium capacity generators, with flat and rectangular blades made of aluminum, automatically structured by bending and molding; and two, for very large generators with an interior longitudinal structure made of aluminum, lined with the same material, fiberglass or stainless steel, filled with expandable polyurethane to avoid vibrations and noise.

6. The wind-powered generator with blades at dihedral angles (PSP), according to claim 1, **characterized by** the rotary movement of two sets of blades on one single horizontal shaft, perpendicular to the blades and to the wind, with the same rotational direction due to the same position of their dihedral angle in the two sets of blades, that determine one single direction of rotation of the blades at a 90° angle to the wind, doubling the production of one single set of blades with dihedral angles.

7. The wind-powered generator with blades at dihedral angles (PSP), according to claim 1, **characterized by** the action of two sets of blades at dihedral angles centered on one theoretical horizontal axis of the generator: one, in the front portion of the electrical generator rotating in one direction and the other set in the rear portion of the nacelle rotating in the opposite direction, activating the two magnetic fields of the dual rotor electrical generator, which doubles its rpm, increasing its electrical generation output twofold using only one wind mass.
